# EUROPEAN PATENT SPECIFICATION

(11) **EP 3 343 083 B1**
(45) Date of publication and mention of the grant of the patent: **05.08.2020**
(21) Application number: 16207156.7
(22) Date of filing: 28.12.2016
(51) Int. Cl.: F16L 27/10, F16L 27/11, F16L 51/02, F16J 3/04

(54) **FLEXIBLE CONDUIT ELEMENT**
FLEXIBLES ROHRELEMENT
ÉLÉMENT DE CONDUITE FLEXIBLE

(43) Date of publication of application: 04.07.2018
(73) Proprietor: Sjm Co., Ltd., Kyungki Province 425-100 (KR)
(72) Inventor: Uwe, Webel, 76877 Offenbach (DE); Lee, Jae Kwang, 67065 Ludwigshafen (DE)
(74) Representative: Grünecker Patent- und Rechtsanwälte PartG mbB

(56) References cited:
- EP-A1- 3 091 263
- FR-A1- 2 703 124
- US-A- 3 030 983
- US-A- 5 261 319

## Description

The present invention refers to a flexible conduit element for the exhaust gas system of a vehicle, comprising a flexible bellows member with corrugations along its longitudinal axis, which corrugations viewed in a cross section along the longitudinal axis comprise alternating concave sections and convex sections, said bellows being formed by a hydro forming process.

Such flexible conduit elements for the exhaust gas system of a vehicle having a combustion engine are commonly known. They are located between an upstream portion of an exhaust pipe and a downstream portion of the exhaust pipe in order to connect the two portions in a flexible manner. Exhaust gas from the combustion engine is conveyed by the upstream portion towards the downstream portion through the flexible conduit element. The exhaust gas exits the downstream portion at a downstream end. The flexible conduit element comprises a flexible bellows member which is commonly made of thin-walled stainless steel with a wall thickness between 0.15 to 0.25 mm. On the inside of the bellows member, the flexible conduit element may comprise a flexible hose and on the outside, it might be protected by a mesh or a braided element.

US 5 261 319 A discloses a bellows comprising identical waves, having sidewalls in which the elastic deformation of the bellows is located and which have a general curved form in the same axial direction. The bellows can thus be put into a state of elastic axial contraction just sufficient, if the bellows are considered in axial half-section, for each sidewall to be at least approximately contiguous at a single point with the other sidewall of the same wave and at a single point with a sidewall of an adjacent respective wave and for the mean wave peak and wave trough directions respectively to be mutually offset in angle, at least one of them being oblique with respect to the axis of the bellows. The relation between the axis travel of the bellows and its life expectancy is thereby optimized.

FR 2 703 124 A1 discloses a flexible conduit elements according to the preamble of claim 1.

During operation, the flexible conduit element is exposed to great stress. It is intended to absorb vibrations from the combustion engine and to allow an axial and a relative radial and bending movement of the end sections of the upstream portion and the downstream portion of the exhaust pipe, with respect to each other.

The flexible conduit element should provide little bending and/or compression resistance in order to effectively absorb vibrations from the combustion engine. On the other hand, it is required to have a long-term durability. The flexible conduit element is intended to be in the vehicle over its lifetime of more than 15 years. The object of the present invention is to improve an existing flexible conduit element in order to provide less resistance in the axial and radial directions.

The object is achieved by a flexible conduit element according to independent claim 1, and by a process of manufacturing a bellows member according to independent claim 9.

According to an embodiment disclosed herein, there is a flexible conduit element for the exhaust gas system of a vehicle, comprising a flexible bellows member with corrugations along its longitudinal axis, which corrugations viewed in a cross section along the longitudinal axis comprise alternating concave sections and convex sections, wherein the convex sections viewed in the axial cross section comprise in a radial direction an inner portion and an outer portion and the inner portion and the outer portion are connected by at least a connecting portion having a continuous curvature and a turning point in curvature.

The specific shape of the convex sections of the corrugations leads to a significant improvement regarding the elastic behavior in the axial direction of the bellows. It furthermore improves the bending behavior as well as the flexibility in a radial direction of the flexible conduit element.

In a preferred embodiment, the connecting portion may extend to either side of the turning point between two points of curvature at which their tangents are parallel viewed in the axial cross section of the bellows member. This definition describes an essentially "S"-shaped cross section of the connecting portion which improves the bending and compression behavior of the flexible conduit element.

Furthermore, the inner section may comprise at least one inner straight portion between the curvature of the concave section and the turning point of curvature viewed in the axial cross section. Such straight portions also improve the compression and bending behavior of the flexible conduit element.

The outer portion of the convex section may comprise a tip portion connecting two outer straight portions of which at least one extends between the tip portion and the turning point of curvature. Such a design may also improve the bending behavior. The rather sharp bend at the tip portion of the convex section improves the bending behavior.

In a preferred embodiment, the bellows member may be provided with two inner straight portions at the inner portion of the convex section which are parallel to each other. This furthermore improves the flexible behavior of the bellows member and further reduces the axial stiffness.

It might also be advantageous if the axial distance of the inner straight portion is larger, preferably 5 to 10 times larger than the axial distance of the outer straight portions when viewed in the axial cross section respectively. Again, the flexible behavior can be improved and in particular the axial stiffness can be reduced.

Moreover, at the bellows member the axial distance between the outer straight portions may be equal or less than the thickness of the material of the bellows member, preferably 0.15 mm to 0.25 mm.

In a further preferred embodiment of the invention, the radial extension of the outer convex portion from the turning point to the tip portion is less than a third of the difference between an outer radius Ra of the bellows member, defined by the outer surface of the tip portion and the smallest inner radius Ri, defined by the inner surface of the concave section. This ratio provides a compromise between low axial stiffness and the necessary radial stiffness.

In another preferred embodiment, the difference between the outer radius Ra and the inner radius Ri is equal or less than one-fifth and equal or more than one-tenth of the outer radius Ra. Such a ratio provides a flexible conduit element with advantageous requirements regarding axial stiffness as well as radial stiffness and compactness.

In a further preferred embodiment, the outer straight portions of the convex section are abutting each other. Thereby manufacturing of a very compact bellows member is possible and has also advantageous properties regarding a low axial stiffness.

The invention furthermore refers to a process for manufacturing a bellows member of the aforementioned kind, wherein the corrugations are formed by hydroforming in one step. This process leads to a cost effective manufacturing process and on the other hand provides a bellows member with very good properties regarding low axial stiffness as well as vibration absorbing capabilities.

In a preferred embodiment, a tool, which viewed in the cross section in an axial direction of the bellows member comprises a cavity for forming the convex section comprising a narrow outer section for forming the outer section of the convex section and a radially inner section, which is along the longitudinal axis wider than the outer section, for forming the inner portion of the convex section of the bellows member. Such a tool allows to form the corrugations in one step.

In a further preferred embodiment, the tool comprises at least two plate-like tool members which together form the cavity. Such sectional tool members using two plate-like sections forming each of the convex section of the corrugations allows to form the corrugations and are also very effective in removing the tool after completion of the hydroforming process.

In the following, the invention will be explained in detail using the following drawings.
Fig. 1 shows a flexible conduit element according to the invention.
Fig. 2 shows a section of the bellows member, in an axial cross section.
Fig. 3 shows one corrugation of the bellows member and a partial view of the tool for manufacturing it in two manufacturing steps (Fig. 3a and 3b).

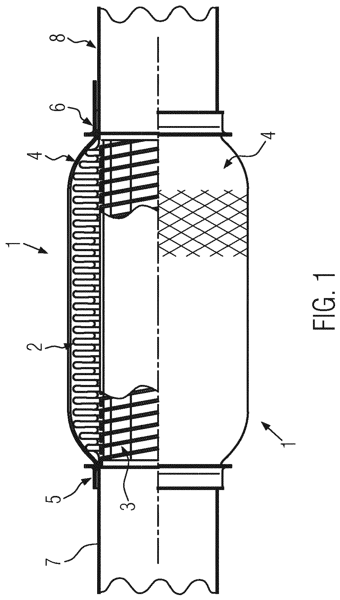

Fig. 1 shows a flexible conduit element 1 of an exhaust system for a vehicle in a cross section along its longitudinal axis. The flexible conduit element comprises a metal bellows 2, preferably an inner flexible hose 3 and an outer mesh 4. The bellows member, the inner hose and a mesh are held together at their ends by rings 5 and 6 in a flexible manner. The upstream side portion of an exhaust pipe is referred to with reference no. 7 and the downstream side portion of the exhaust pipe is referred to with reference no. 8. Both portions of the exhaust pipe are only schematically shown. They are both connected in a flexible manner through the flexible conduit element. Exhaust gas is guided from the combustion engine from the upstream side portion towards the downstream side portion of the exhaust pipe through the flexible conduit element.

In a preferred embodiment, the flexible hose 3 is in an agraffe-type hose. Of course, other flexible hoses are possible. It is furthermore also possible not to use any inner flexible hose 3. In a preferred embodiment, the outer mesh 4 is a braided metal wire. However, other solutions are possible such as a knitted wire mesh instead of the braided wire mesh 4. There are also embodiments without any outer mesh 4 possible.

The bellows member within the flexible conduit element is intended to absorb any axial and radial movements or angular movements of the upstream side portion of the exhaust pipe in relation to the downstream side portion of the exhaust pipe during operation of the vehicle. Accordingly, the bellows member is exposed to great stress regarding vibrations and bending. The requirements for such flexible conduit elements are very challenging. They are mounted underneath a car and are therefore exposed to the elements. They are exposed to water, salt and low temperature on the outside. At the same time, hot exhaust gases are guided through the flexible element on the inside. In order to absorb vibrations of a vehicle, a low axial stiffness is required. At the same time, the flexible conduit element needs to meet the requirements for durability for the lifetime of a vehicle, which is more than 15 years.

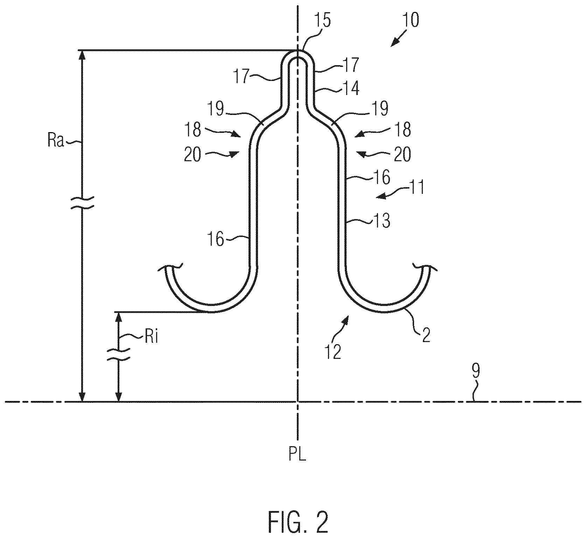

In order to achieve these requirements, the flexible conduit element according to the invention comprises a bellows member with a specific shape of the corrugations. Fig. 2 shows an embodiment of the bellows member, wherein a corrugation is shown in a cross section. Only a part of the corrugation is shown. The cross section extends along the longitudinal axis of the essential cylindrical bellows member and flexible conduit element. Only the upper half in Fig. 2 shows the longitudinal axis in a cross section. The lower half shows the outside of the bellows member The corrugations of the bellows member are essentially ring- or toroidal-shaped and extend around the longitudinal axis of the bellows member which is also the longitudinal axis of the flexible conduit element. The longitudinal axis is referred to with reference no. 9. The following explanations are given viewed in a cross section along the longitudinal axis.

The preferred embodiment of the corrugations of the bellows member are depicted in Fig. 2. The corrugations 10 comprise convex sections 11 and concave sections 12. The convex section 11 comprises an inner convex portion 13 and an outer convex portion 14. Furthermore, it comprises a tip portion 15. Moreover, the inner convex portion 13 comprises inner straight portions 16 and the outer convex portion comprises outer straight portions 17. The outer straight portions 17 are connected by the tip portion. The inner straight portions 16 and outer straight portions 17 are connected by a curve portion 18 which has a turning point 19.

In the preferred embodiment, the convex portions 11 are symmetrical according to a radial plane PL perpendicular to the longitudinal axis 9. However, other embodiments are possible too, wherein the inner and/or outer straight sections may have different length and bent portions 18 which may have different radii of curvature.

The turning point 19 is part of a connecting portion 20 which comprises a turning point which extends to a point of curvature to either side of the turning point wherein the tangents are parallel with the neighboring inner and outer straight portions respectively. The connecting portion 20 connects the outer convex portion and the inner convex portion. The inner convex portion extends radially inward of the bellows member to a point of curvature, wherein the tangent is parallel to the tangents just mentioned.

In the preferred embodiment, the inner straight portions and the outer straight portions are parallel to each other respectively. They also extend parallel to the radial plane PL. However, there are also embodiments, wherein the inner straight portions and/or the outer straight portions are not parallel to each other. An embodiment, wherein the outer straight portions are not parallel to each other, they may enclose by an angle of 10-20°. The outer straight portions 17 may extend from the tip portion 15 such that they diverge towards the longitudinal axis. The preferred angle would be about 15°. In a further embodiment, they may also converge towards the longitudinal axis. However, a diverging configuration of the outer straight portions is preferably for reasons of manufacturing and also regarding the bending behavior. In a further embodiment, it might also be possible that the two straight portions are actually touching each other and are in abutment. Such a configuration at least leads to a very compact bellows member.

In a similar manner, the inner straight portions may also converge towards the longitudinal axis 9 which can lead to an improved bending behavior. The term straight portion indicates a set portion, which viewed in the cross section along the longitudinal axis 9 is essentially straight. This section might also be slightly concave or convex due to the manufacturing process. They are also described in the original shape after manufacturing. When installed in the flexible conduit element, they might be bent. Furthermore, under compression, the inner and/or outer straight portions may not keep their straight shape and also may not stay in a parallel configuration.

Certain sizes and ratios of the corrugations have been proven advantageous regarding the axial stiffness. The ratios and sizes are given in relation to an outer radius Ra and an inner radius Ri. The outer radius Ra is measured from the outer surface of the tip portion to the longitudinal axis. The inner radius Ri is the most inner surface of the concave section in relation to the longitudinal axis 9. In a preferred embodiment, the radial extension of the outer convex portion from the turning point to the tip portion is less than a third of a difference between the outer radius Ra of the bellows member defined by the outer surface of the tip portion and the smallest inner radius Ri defined by the inner surface of the concave section. In a preferred embodiment, the radial extension is one-fifth.

The bellows member is made from a stainless steel with a wall thickness between 0.15 mm and 0.25 mm. This wall thickness allows the hydroforming process and also provides for the flexible behavior of the bellows member. In the preferred embodiment, there is a gap between the outer straight portions. In the embodiment of Fig. 2, the outer straight portion is essentially parallel to each other and the distance between the other straight portions is equal or less than the thickness of the material of the bellows member, preferably 0.2 mm. Regarding the inner straight portions, the axial distance of the inner straight portions of one convex section is at least 5 to 10 times larger than the axial distance of the outer straight sections viewed in the axial cross section.

An explanatory embodiment of the bellows member has a total length of 300 mm along the longitudinal axis and an outer diameter Da of 80 mm. The corresponding outer radius Ra is 40 mm. An inner radius Ri is 30 mm. The corresponding inner diameter Di is 60 mm. The distance between the two inner straight portions of the inner portion of the convex corrugation is about 5 mm. These sizes vary depending on the application.

In the following, manufacturing of the bellows member of the flexible conduit element according to the invention is explained below.

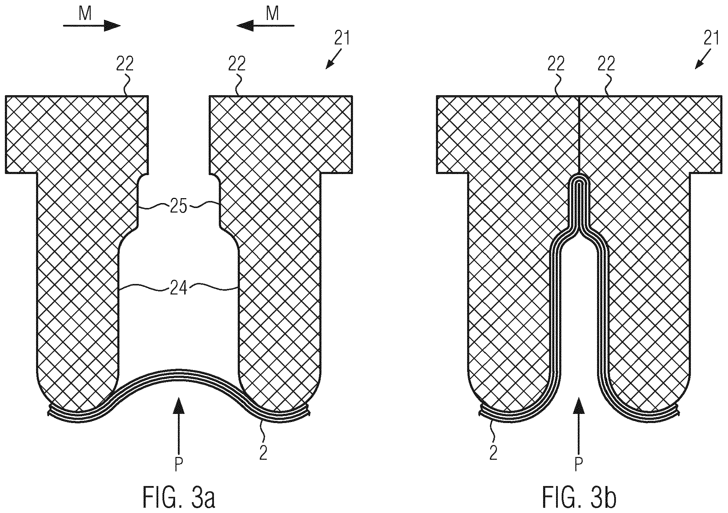

A tool 21 comprises several plate-like tool members 22 which are movable along an axial direction. Two of the tool members form in a closed configuration cavity 23. As shown in Fig. 3, the cavity 23 comprises an inner section 24 and an outer section 25.

The tool members 22 are at first separated and a tubular metal member is placed in the tool. As shown in Fig. 3a, liquid is kept under pressure P within the tubular member and expands the tubular member into the tool members. In a simultaneous movement 11 of the tool members towards each other, the pressure P expands the tubular member into the cavities 23 between the tool members until the tool members touch each other or at least are in a so-called closed position. In this condition as depicted in Fig. 3b, the convex corrugations are formed. The concave corrugations are obtained through a bending process. The cavities 23 are forming the convex sections of the corrugations. In a consecutive step, the metal bellows may be further compressed in order to obtain a certain bending curve of the concave sections and/or convex sections.

In one embodiment, the cavities 23 are designed such that in the closed condition of the tool members 22, the outer straight portions 17 touch each other. This leads to a specific configuration which is very compact on the one hand and at the same time has a very low axial stiffness.

Due to the shape of the tool members, it is now possible to obtain a bellows member according to the present invention in one hydroforming processing step. The new process leads to a significant lowering of manufacturing costs and leads to a bellows member with improved properties regarding its axial stiffness. Due to the hydroforming process, there is a gap between the outer straight sections of the convex section. This gap allows hydroforming of this section.

## Claims

1. Flexible conduit element for the exhaust gas system of a vehicle, comprising a flexible bellows member (1) with corrugations (10) along its longitudinal axis (9), which corrugations viewed in a cross section along the longitudinal axis comprise alternating concave (12) sections and convex (11) sections, said bellows being formed by a hydroforming process, wherein
the convex sections (11) viewed in the axial cross section comprise in a radial direction an inner portion and an outer portion,
the inner portion comprises two inner straight portions (16) which are parallel to each other,
the outer portion comprises a tip portion (15) connecting two outer straight portions (17), the two outer straight portions (17) extend from the tip portion and are parallel to each other, and
the inner portion and the outer portion are connected by at least a connecting portion (20) having a continuous curvature and a turning point (19) in curvature,
**characterized in that**
the axial distance of the inner straight sections is more than 5 times larger than the axial distance of the outer straight sections when viewed in the axial cross section respectively.

2. Flexible conduit element according to claim 1, **characterized in that** the connecting portion extends to either side of the turning point (19) between two points of curvature of which their tangents are parallel viewed in the axial cross section of the bellows member (1).

3. Flexible conduit element according to claim 1 or 2, **characterized in that** the inner section comprises at least one inner straight portion (16) between the curvature of the concave section and the turning point of curvature (19) viewed in the axial cross section.

4. Flexible conduit element according to at least one of claims 1 to 3, **characterized in that** the axial distance of the inner straight sections is less than 10 times larger than the axial distance of the outer straight sections when viewed in the axial cross section respectively.

5. Flexible conduit element according to at least one of claims 1 to 4, **characterized in that** the axial distance between the outer straight sections is equal or less than the thickness of the material of the bellows member, preferable 0,15 mm to 0,25 mm.

6. Flexible conduit element according to at least one of claims 1 to 5, **characterized in that** the radial extension of the outer convex portion from the turning point to the tip portion is less than a third of the difference between an outer radius Ra of the bellows member defined by the outer surface of the tip portion and a smallest inner radius Ri defined by the inner surface of the concave section.

7. Flexible conduit element according to at least one of claims 1 to 6, **characterized in that** the difference between the outer radius Ra and the inner radius Ri is equal or less than one fifth and equal or more than one tenth of the outer radius Ra.

8. Flexible conduit element according to at least one of claims 1 to 7, **characterized in that** the outer straight portions of a convex section are abutting each other.

9. Process of manufacturing a flexible conduit element according to at least one of claims 1 to 8, **characterized in that** the corrugations of the bellows member are formed by hydroforming in one step.

10. Process according to claim 9, **characterized in that** a tool (21), which viewed in the cross section in the axial direction of the bellows member, comprises a cavity (23) for forming the convex section comprising a narrow outer section (25) for forming the outer section of the convex section and a radially inner section, which is along the longitudinal axis (9) wider than the outer section, for forming the inner portion of the convex section of the bellows member.

11. Process according to claim 10, **characterized in that** the tool comprises at least two plate-like tool members (22) with together from the cavity.

## Patentansprüche

1. Flexibles Leitungselement für das Abgassystem eines Fahrzeugs, umfassend ein flexibles Balgelement (1) mit Wellen (10) entlang seiner Längsachse (9), wobei die Wellen, in einem Querschnitt entlang der Längsachse gesehen, abwechselnd konkave Abschnitte (12) und konvexe Abschnitte (11) umfassen, und der Balg mittels eines Hydroforming-Prozesses hergestellt wird, wobei
die konvexen Abschnitte (11), in dem axialen Querschnitt gesehen, in einer radialen Richtung einen inneren Teil und einen äußeren Teil umfassen,
der innere Teil zwei innere gerade Teile (16) umfasst, die parallel zueinander sind,
der äußere Teil einen vorderen Teil (15) umfasst, der zwei äußere gerade Teile (17) verbindet,
die zwei äußeren geraden Teile (17) sich von dem vorderen Teil aus erstrecken und parallel zueinander sind, und
der innere Teil und der äußere Teil durch wenigstens einen verbindenden Teil (20) verbunden sind, der eine kontinuierliche Krümmung und einen Wendepunkt (19) in der Krümmung aufweist,
**dadurch gekennzeichnet, dass**
der axiale Abstand der inneren geraden Teile, jeweils in dem axialen Querschnitt gesehen, mehr als 5 mal größer ist als der axiale Abstand der äußeren geraden Teile.

2. Flexibles Leitungselement nach Anspruch 1, **dadurch gekennzeichnet dass** sich der verbindende Teil zu beiden Seiten des Wendepunktes (19) zwischen zwei Krümmungspunkten erstreckt, deren Tangenten, in dem axialen Querschnitt des Balgelementes (1) gesehen, parallel sind.

3. Flexibles Leitungselement nach Anspruch 1 oder 2, **dadurch gekennzeichnet, dass** der innere Abschnitt, in dem axialen Querschnitt gesehen, wenigstens einen inneren geraden Teil (16) zwischen der Krümmung des konkaven Abschnitts und dem Wendepunkt (19) der Krümmung umfasst.

4. Flexibles Leitungselement nach wenigstens einem der Ansprüche 1 bis 3, **dadurch gekennzeichnet, dass** der axiale Abstand der inneren geraden Abschnitte, jeweils in dem axialen Querschnitt gesehen, weniger als 10 mal größer ist als der axiale Abstand der äußeren geraden Abschnitte.

5. Flexibles Leitungselement nach wenigstens einem der Ansprüche 1 bis 4, **dadurch gekennzeichnet, dass** der axiale Abstand zwischen den äußeren geraden Abschnitten genauso groß ist wie oder kleiner als die Dicke des Materials des Balgelementes, vorzugsweise 0,15 mm bis 0,25 mm.

6. Flexibles Leitungselement nach wenigstens einem der Ansprüche 1 bis 5, **dadurch gekennzeichnet, dass** die radiale Ausdehnung des äußeren konvexen Teils von dem Wendepunkt zu dem vorderen Teil weniger als ein Drittel der Differenz zwischen einem durch die Außenfläche des vorderen Teils gebildeten Außenradius Ra des Balgelementes und einem durch die Innenfläche des konkaven Abschnitts gebildeten kleinsten Innenradius Ri beträgt.

7. Flexibles Leitungselement nach wenigstens einem der Ansprüche 1 bis 6, **dadurch gekennzeichnet, dass** die Differenz zwischen dem Außenradius Ra und dem Innenradius Ri genauso groß ist wie oder kleiner als ein Fünftel und genauso groß ist wie oder größer als ein Zehntel des Außenradius Ra mehr.

8. Flexibles Leitungselement nach wenigstens einem der Ansprüche 1 bis 7, **dadurch gekennzeichnet, dass** die äußeren geraden Teile eines konvexen Abschnitts aneinander anliegen.

9. Verfahren zum Herstellen eines flexiblen Leitungselementes nach wenigstens einem der Ansprüche 1 bis 8, **dadurch gekennzeichnet, dass** die Wellen des Balgelementes mittels Hydroforming in einem Schritt hergestellt werden.

10. Verfahren nach Anspruch 9, **dadurch gekennzeichnet, dass** ein Werkzeug (21), das, in dem Querschnitt in der axialen Richtung des Balgelementes gesehen, einen Hohlraum (23) zum Ausbilden des konvexen Abschnitts umfasst, der einen schmalen äußeren Abschnitt (25) zum Ausbilden des äußeren Abschnitts des konvexen Abschnitts und einen radial innenliegenden Abschnitt, der entlang der Längsachse (9) breiter ist als der äußere Abschnitt, zum Ausbilden des inneren Teils des konvexen Abschnitts des Balgelementes umfasst.

11. Verfahren nach Anspruch 10, **dadurch gekennzeichnet, dass** das Werkzeug wenigstens zwei plattenartige Werkzeugelemente (22) mit zusammen vom Hohlraum umfasst.

## Revendications

1. Élément de conduite flexible pour le système de gaz d'échappement d'un véhicule, comprenant un élément de soufflet flexible (1) avec des ondulations (10) le long de son axe longitudinal (9), lesdites ondulations, vues en section transversale le long de l'axe longitudinal, comprenant des sections alternativement concaves (12) et convexes (11), ledit soufflet étant formé par un processus d'hydroformage, dans lequel
les sections convexes (11), vues en section transversale axiale, comprennent en direction radiale une portion interne et une portion externe,
la portion interne comprend deux portions droites internes (16) qui sont parallèles entre elles,
la portion externe comprend une portion de pointe (15) qui connecte deux portions droites externes (17),
les deux portions droites externes (17) s'étendent depuis la portion de pointe et sont parallèles entre elles, et
la portion interne et la portion externe sont connectées par au moins une portion de connexion (20) présentant une courbure continue et un point d'inflexion (19) dans la courbure,
**caractérisé en ce que**
la distance axiale des sections droites internes est plus de 5 fois plus grande que la distance axiale des sections droites externes, vues respectivement en section transversale axiale.

2. Élément de conduite flexible selon la revendication 1, **caractérisé en ce que** la portion de connexion s'étend de chaque côté du point d'inflexion (19) entre deux points de courbure dont les tangentes sont parallèles, vu en section transversale axiale de l'élément de soufflet (1).

3. Élément de conduite flexible selon la revendication 1 ou 2, **caractérisé en ce que** la section interne comprend au moins une portion droite interne (16) entre la courbure de la section concave et la courbure du point d'inflexion (19), vu en section transversale axiale.

4. Élément de conduite flexible selon au moins l'une des revendications 1 à 3, **caractérisé en ce que** la distance axiale des sections droites internes est moins de 10 fois plus grande que la distance axiale des sections droites externes, vues respectivement en section transversale axiale.

5. Élément de conduite flexible selon au moins l'une des revendications 1 à 4, **caractérisé en ce que** la distance axiale entre les sections droites externes est inférieure ou égale à l'épaisseur du matériau de l'élément de soufflet, et est de préférence comprise entre 0,15 mm et 0,25 mm.

6. Élément de conduite flexible selon au moins l'une des revendications 1 à 5, **caractérisé en ce que** l'extension radiale de la portion convexe externe du point d'inflexion à la portion de pointe est inférieure au tiers de la différence entre le rayon externe Ra de l'élément de soufflet défini par la surface externe de la portion de pointe et le rayon interne le plus petit Ri défini par la surface interne de la section concave.

7. Élément de conduite flexible selon au moins l'une des revendications 1 à 6, **caractérisé en ce que** la différence entre le rayon externe Ra et le rayon interne Ri est inférieure ou égale à un cinquième et supérieure ou égale à un dixième du rayon externe Ra.

8. Élément de conduite flexible selon au moins l'une des revendications 1 à 7, **caractérisé en ce que** les portions droites externes d'une section convexe sont mutuellement à butée.

9. Processus de fabrication d'un élément de conduite flexible selon au moins l'une des revendications 1 à 8, **caractérisé en ce que** les ondulations de l'élément de soufflet sont formées par hydroformage en une seule étape.

10. Processus selon la revendication 9, **caractérisé en ce que** un outil (21), lorsqu'il est vu en section transversale en direction axiale de l'élément de soufflet, comporte une cavité (23) pour former la section convexe comprenant une section externe étroite (25) pour former la section externe de la section convexe et une section radialement interne, qui est plus large que la section externe selon l'axe longitudinal (9), pour former la portion interne de la section convexe de l'élément de soufflet.

11. Processus selon la revendication 10, **caractérisé en ce que** l'outil comprend au moins deux éléments d'outil en forme de plaque (22) qui forment conjointement la cavité.
